# EUROPEAN PATENT SPECIFICATION

(11) **EP 3 475 355 B1**
(45) Date of publication and mention of the grant of the patent: **05.08.2020**
(21) Application number: 17731541.3
(22) Date of filing: 20.06.2017
(51) Int. Cl.: C08K 3/22, C08L 23/28

(54) **TYRE SEALANT LAYER**
REIFENDICHTMITTELSCHICHT
COUCHE D'ÉTANCHÉITÉ POUR PNEU

(30) Priority: 22.06.2016 IT UA20164595
(43) Date of publication of application: 01.05.2019
(73) Proprietor: Bridgestone Corporation, Tokyo 104-8340 (JP)
(72) Inventor: AGORETTI, Pasquale, 00128 Roma (IT); PEZZULLO, Giuseppe, 00128 Roma (IT); HOUSE, John, Nazareno, 00128 Roma (IT); MADAU, Francesco, 00128 Roma (IT)
(74) Representative: Marchetti, Alessio
(86) International application number: PCT/EP2017/065004
(87) International publication number: WO 2017/220523

(56) References cited:
- EP-A1- 2 070 677
- WO-A1-01/60639
- DE-A1-102004 041 746
- US-B1- 6 476 110
- DATABASE WPI Week 201051 Thomson Scientific, London, GB; AN 2010-J34489 XP002764423, & JP 2010 159371 A (SUMITOMO RUBBER IND LTD) 22 July 2010 (2010-07-22)

## Description

The present invention relates to a compound for the preparation of a tyre sealant layer.

In order to counteract the effects deriving from the puncturing of tyres, the utilization of a sealant layer arranged within the inner cavity of the tyre has been known of for a long time. Such a sealant layer can either be in contact with the inflation gas within the tyre or else covered with a protective polymer or elastomeric layer. In particular, the sealant layer is generally arranged onto the central area of the inner cavity at the tread strip.

In particular, the aim of the sealant layer is to surround and adhere to the object that penetrated the tread, thus preventing deflation of the tyre thanks to instantaneous "sealing". Furthermore, if the penetrated object escapes, the material of the sealant layer will fill the hole left by the object thereby sealing the same.

Part of tyre research is focused on improving the effectiveness of the sealant layer with special attention to the rheological characteristics thereof. In fact, the viscosity of the sealant layer must guarantee both the sealing action with respect to the penetrated object and with respect to any hole as described above, and the stability thereof within the inner cavity independently of the static or dynamic conditions of the tyre.

The inventors of the present invention have made a tyre sealant layer whose technical characteristics are such to guarantee an improvement in sealing performance.

The object of the present invention is a tyre sealant layer made from a rubber compound comprising at least a polymer base and a filler; said sealant layer being characterized in that said filler comprises a magnetic material in the form of nanoparticles with dimensions of between 1 and 100 nm.

Preferably, said polymer base comprises an essentially saturated polymer.

Here and hereinafter "essentially saturated polymer" refers to a polymer made with less than 15 mole % of diene monomers.

Preferably, the rubber compound comprises from 5 to 50 phr, more preferably from 15 to 30 phr, of said magnetic material.

Preferably, said magnetic material is a magnetic ferrite.

Preferably, said magnetic ferrite is comprised within the group composed of barium ferrite, strontium ferrite, cobalt ferrite, manganese ferrite, maghemite (γ - Fe₂O₃) or mixtures thereof.

Preferably, said polymer base comprising an essentially saturated polymer is a halobutyl and/or butyl rubber.

Another object is a tyre comprising a sealant layer according to the present invention.

The following are examples of non-limiting embodiments given purely by way of illustration.

Five compounds were prepared (A-E), wherein the first three (A-C) represent three comparison examples, while the fourth and fifth (D and E) are examples of compounds made according to the dictates of the present invention.

In particular, the comparison compound A relates to a compound currently utilized for the preparation of sealant layers, comparison compound B differs from comparison compound A in the addition of a magnetic ferrite the particles thereof having dimensions greater than 100 nm, while comparison compound C differs from comparison compound A in that the carbon black has been replaced by a magnetic ferrite the particles thereof having dimensions greater than 100 nm.

The compound of the invention D differs from comparison compound A in that a magnetic ferrite has been added, the particles thereof having dimensions of between 1 and 100 nm, whereas the compound of the invention is distinct from comparison compound A insofar as the carbon black has been replaced by a magnetic ferrite, the particles thereof having dimensions of between 1 and 100 nm.

In essence, the comparison compounds B and C differ from the respective ("respective" refers to the presence or absence of carbon black) compounds of the invention D and E as regards the dimensions of the magnetic ferrite particles.

In Table I the compositions in phr of the five compounds are listed.

**TABLE I**

| | A | B | C | D | E |
|---|---|---|---|---|---|
| Br-IIR | 100 | | | | |
| Liquid P-Butene | 350 | | | | |
| Carbon black | 20 | 20 | -- | 20 | -- |
| Magnetic Ferrite* | -- | 20 | 20 | -- | -- |
| Magnetic Ferrite** | -- | -- | | 20 | 20 |

BR-IIR stands for bromobutyl rubber.

The magnetic ferrite* with the formula Fe₂O₃ (Magnetite) is marketed by the company INOXIA and has a dimension of 53 µm and a density of 5200 Kg/m².

The magnetic ferrite** with the formula Fe₂O₃ (Magnetite) is marketed by the company IO-LI-TEC and has a dimension between 20 and 30 nm and a density of 5175 Kg/m² .

The following is the procedure for the mixing step.

### - Mixing step -

The ingredients listed in Table I were mixed together and left to stir at 100°C for a period of 10 min.

From each of the compounds made as described above, a related sealant layer was produced.

Tests in order to verify the sealing properties of the above layers were performed on the tyres upon which, under the same conditions, a respective sealant layer deriving from the compounds A-E was applied. Specifically, the sealant layer was extruded directly onto the surface of the inner cavity of the tyre.

The tests involved pressure retention following the puncturing of the tyre made with a standard nail (the same type of nail) and the degree of coverage of the nail by the sealant once it had been removed.

In particular, the pressure retention test was performed both with a stationary tyre and under conditions of a tyre in rotation (20 Hz).

The tyres, after being inflated to the same internal pressure, were subjected to the same puncturing conditions with the subsequent removal of the nail. For each of the tyres subjected to the test, the pressure retention was measured 24 h after puncturing (and subsequent removal of the object).

As mentioned above, one of the tests regarding the sealing capacities of the layers involved assessing the degree of coverage by the sealant layer of the nail that performed the puncturing.

In Table II the values relating to both the air retention and the degree of nail coverage are listed. For a more immediate evaluation of the advantages conferred by the present invention, the values of Table II are expressed in indexed form with respect to the results obtained for compound A.

The higher the values reported, the better the sealing capacity of the associated layer.

**TABLE II**

| | A | B | C | D | E |
|---|---|---|---|---|---|
| Degree of puncturing nail coverage | 100 | 103 | 105 | 110 | 115 |
| Pressure retention under static conditions | 100 | 101 | 103 | 105 | 110 |
| Pressure retention under dynamic conditions | 100 | 100 | 102 | 103 | 110 |

From the results of Table II, it is clear that the presence of magnetic material in the form of nanometric particles within the sealant layer (layer associated with compounds D and E of the invention) guarantees greater sealing performance than that found for the commonly utilized sealant layer (layer associated with compound A of the invention).

Furthermore, a comparison of the values for the compounds B and C and the values relating to the respective compounds D and E shows how the dimensions of the particles of the magnetic material play a fundamental role in the advantages that the same magnetic material confers to the sealant layer. Indeed, it has been experimentally proven by the inventors that, if the particles of the magnetic material have dimensions that are greater than 100 nm, the viscoelastic properties of the sealant layer are such that they cancel out the advantages of using the magnetic material itself.

Finally, it has been found that the presence of the magnetic material within the sealant layer causes the same to also interact with other metal tyre parts, thus ensuring the retention of the layer during the puncture filling step.

## Claims

1. Tyre sealant layer made from a rubber compound comprising at least a polymer base and a filler; said sealant layer being **characterized in that** said filler comprises a magnetic material in the form of nanoparticles with dimensions of between 1 and 100 nm.

2. Sealant layer according to claim 1, **characterized in that** said polymer base comprises an essentially saturated polymer.

3. Sealant layer according to claim 1 or 2, **characterized in that** said rubber compound comprises from 5 to 50 phr of said magnetic material.

4. Sealant layer according to one of the preceding claims, **characterized in that** said rubber compound comprises from 15 to 30 phr of said magnetic material.

5. Sealant layer according to one of the preceding claims, **characterized in that** said magnetic material is a magnetic ferrite.

6. Sealant layer according to claim 5, **characterized in that** said magnetic ferrite is comprised within the group composed of barium ferrite, strontium ferrite, cobalt ferrite, manganese ferrite, maghemite (γ - Fe₂O₃) or mixtures thereof.

7. Sealant layer according to one of the preceding claims, **characterized in that** said polymer base comprising an essentially saturated polymer is a halobutyl and/or butyl rubber.

8. Tyre comprising a sealant layer according to one of the preceding claims.

## Patentansprüche

1. Reifendichtmittelschicht, hergestellt aus einer Gummimischung, umfassend mindestens eine Polymerbasis und einen Füllstoff; wobei die Dichtmittelschicht **dadurch gekennzeichnet ist, dass** der Füllstoff ein magnetisches Material in Form von Nanopartikeln mit Abmessungen zwischen 1 und 100 nm umfasst.

2. Dichtmittelschicht nach Anspruch 1, **dadurch gekennzeichnet, dass** die Polymerbasis ein im Wesentlichen gesättigtes Polymer umfasst.

3. Dichtmittelschicht nach Anspruch 1 oder 2, **dadurch gekennzeichnet, dass** die Gummimischung 5 bis 50 phr des magnetischen Materials umfasst.

4. Dichtmittelschicht nach einem der vorstehenden Ansprüche, **dadurch gekennzeichnet, dass** die Gummimischung 15 bis 30 phr des magnetischen Materials umfasst.

5. Dichtmittelschicht nach einem der vorstehenden Ansprüche, **dadurch gekennzeichnet, dass** das magnetische Material ein magnetisches Ferrit ist.

6. Dichtmittelschicht nach Anspruch 5, **dadurch gekennzeichnet, dass** das magnetische Ferrit in der Gruppe umfasst ist, zusammengesetzt aus Bariumferrit, Strontiumferrit, Kobaltferrit, Manganferrit, Maghemit (γ - Fe₂O₃) oder Mischungen davon.

7. Dichtmittelschicht nach einem der vorstehenden Ansprüche, **dadurch gekennzeichnet, dass** die ein im Wesentlichen gesättigtes Polymer umfassende Polymerbasis ein Halobutyl- und/oder Butylgummi ist.

8. Reifen, umfassend eine Dichtmittelschicht nach einem der vorstehenden Ansprüche.

## Revendications

1. Couche d'étanchéité de pneu fabriquée à partir d'un composé de caoutchouc comprenant au moins une base polymère et une charge ; ladite couche d'étanchéité étant **caractérisée en ce que** ladite charge comprend un matériau magnétique sous la forme de nanoparticules avec des dimensions comprises entre 1 et 100 nm.

2. Couche d'étanchéité selon la revendication 1, **caractérisée en ce que** ladite base polymère comprend un polymère sensiblement saturé.

3. Couche d'étanchéité selon la revendication 1 ou 2, **caractérisée en ce que** ledit composé de caoutchouc comprend de 5 à 50 pcc dudit matériau magnétique.

4. Couche d'étanchéité selon l'une des revendications précédentes, **caractérisée en ce que** ledit composé de caoutchouc comprend de 15 à 30 pcc dudit matériau magnétique.

5. Couche d'étanchéité selon l'une des revendications précédentes, **caractérisée en ce que** ledit matériau magnétique est une ferrite magnétique.

6. Couche d'étanchéité selon la revendication 5, **caractérisée en ce que** ladite ferrite magnétique est comprise au sein du groupe composé de ferrite de baryum, ferrite de strontium, ferrite de cobalt, ferrite de manganèse, maghémite (γ - Fe₂O₃) ou des mélanges de celles-ci.

7. Couche d'étanchéité selon l'une des revendications précédentes, **caractérisée en ce que** ladite base polymère comprenant un polymère sensiblement saturé est un caoutchouc halobutyle et/ou butyle.

8. Pneu comprenant une couche d'étanchéité selon l'une des revendications précédentes.
